# EUROPEAN PATENT APPLICATION

(11) **EP 2 008 919 A1**
(43) Date of publication of application: **31.12.2008**
(21) Application number: 07741338.3
(22) Date of filing: 10.04.2007
(51) Int. Cl.: B62D 55/20, B62D 55/205, B62D 55/21, B62D 55/26

(54) **CRAWLER BELT**

(30) Priority: 18.04.2006 JP 2006114909
(71) Applicant: Komatsu Ltd, Minato-ku Tokyo 107-8414 (JP)
(72) Inventor: MAEDA, Kazuo, Hirakata-shi, Osaka 573-1011 (JP)
(74) Representative: Bredema
(86) International application number: PCT/JP2007/057902
(87) International publication number: WO 2007/119719

(57) **Abstract**

A first assembly 22A has two first links 25 that are parallel to each other and a second assembly 22B has two second links 28 that are parallel to each other. Sleeves 30 that are provided at both end portions of the second assembly 22B are externally fitted to support shafts 27 that are provided at both end portions of the first assembly 22A, respectively. When the total number of the assemblies is odd, a third assembly 22C is arranged between the first assembly 22A and the second assembly 22B. The sleeve 30 of the second assembly 22B is externally fitted to the support shaft 27 of the third assembly 22C and the sleeve 30 of the third assembly 22C is externally fitted to the support shaft 27 of the first assembly 22A. Therefore, even if the total number of the assemblies for the crawler belt is odd, the crawler belt of a parallel-link type can be applied.

## Description

### TECHNICAL FIELD

The present invention relates to a crawler belt provided in a crawler-type work machine.

### BACKGROUND ART

Generally, a crawler belt of a crawler-type work machine such as a bulldozer or a hydraulic excavator is formed by connecting a plurality of assemblies for a crawler belt in an endless state. The crawler belt is wound around a drive wheel and an idler wheel that are arranged in a body frame of the crawler-type work machine with a predetermined distance therebetween. Each of the crawler belt assemblies is engaged to a sprocket tooth of a drive wheel and when the drive wheel is driven, the crawler belt is moved while being supported by carrier rollers and track rollers that are supported by the body frame between the drive wheel and the idler wheel.

As an example of a crawler belt assembly in such a crawler belt, the crawler belt assembly disclosed in Fig. 7 of Patent Document 1 and the crawler belt assembly disclosed in Figs. 1 to 3 of Patent Document 1 have been conventionally known. In the configuration disclosed in Fig. 7 of Patent Document 1, two links are fixed to a surface of a track shoe that is opposite to a contact surface that contacts a ground, that is, an inner surface of the track shoe. A support shaft is supported between end portions at one end of the links, and a sleeve is fixed to the other end portions of the links. End portions of the links in which the support shaft is provided are offset outward of the track shoe. The support shaft of each of the crawler belt assemblies having the same configuration is inserted through the sleeve of an adjacent assembly so as to be rotatable. Accordingly, a plurality of assemblies are joined to each other at a same phase, that is, in a same direction so as to form a crawler belt. This kind of crawler belt is referred to as an in-phase link type (offset link type).

In the configuration disclosed in Figs. 1 to 3 of Patent Document 1, two first links comprising substantially flat plates are fixed to an inner surface of the track shoe so as to be parallel to each other, and support shafts are provided between end portions of the first links. Accordingly, a first assembly is formed. Two second links comprising substantially flat plates are fixed to the inner surface of the track shoe so as to be parallel to each other, and sleeves are provided between end portions of the second links. Accordingly, a second assembly is formed. The distance between the links of the second assembly is less than the distance between the links of the first assembly. The second links of the second assembly are arranged parallel to each other at the inner side of the first links of the first assembly. The sleeves of the second assembly are externally fitted to the support shafts of the first assembly so as to be rotatable. Accordingly, a plurality of first and second assemblies are joined to each other to form a crawler belt. This kind of crawler belt is referred to as a parallel-link type (roller-link type).

In the crawler belt having the configuration where the sleeve is fixed to the links such as a crawler belt of the in-phase link type, the sleeve functions as a bearing member that rotatably connects the assemblies each other and also functions as a power transmission member that receives power from a sprocket of a drive wheel. Therefore, in the configuration disclosed in Fig. 7 of Patent Document 1, since the sleeves are fixed to the end portions of the links, a specific portion of an outer surface of the sleeves are worn due to sliding contact with tooth surfaces of the sprocket, and this requires a rotating operation of the sleeve with respect to the links at a certain timing. This rotating operation is referred to as bushing turn. However, the rotating operation of the sleeve that is in a fixed state is troublesome.

To cope with such problems, the crawler belts disclosed in Patent Document 2 or Figs. 1 to 3 of Patent Document 1 have been conventionally proposed. In the related art configurations, the sleeve that is arranged between the end portions of the links is divided into three portions. Two end portions of the sleeve are fixed to the end portions of the link and a middle portion of the sleeve is supported by the support shaft of an adjacent assembly so as to be rotatable. This reduces relative sliding of the sleeve and the sprocket when they are meshed with each other and prevents uneven wear of the sleeve.

On the other hand, in the crawler belt of the parallel-link type as disclosed in Figs. 1 to 3 of Patent Document 1, if the total number of the assemblies of the crawler belt is even, the crawler belt is formed only by the first and second assemblies. In this case, since the first assembly has a rectangular structure having four sides of the first links and the support shafts that are provided between the end portions of the first links, high rigidity is ensured. In the configuration where the sleeve is rotatable with respect to the links, since the sleeve is not fixed between the two end portions of the second links of the second assembly, a portion between the two end portions is dynamically open. Therefore, the second assembly does not have high rigidity. Therefore, in the configuration disclosed in Figs. 1 to 3 of Patent Document 1, the size of a shaft hole for a sleeve of the second links along its axial line is set to be greater than the size of a shaft hole for a support shaft of the first links along its axial line. This increases attaching strength of the support shaft and increases the rigidity of the second assembly.
Patent Document 1: Japanese Laid-Open Patent Publication No. 2004-249973
Patent Document 2: Japanese National Phase Laid-open Patent Publication No. 6-504747

### BRIEF DESCRIPTION OF THE DRAWINGS

Fig. 1 is a front view showing a crawler belt according to a first embodiment;
Fig. 2 is an enlarged front view showing a portion of the crawler belt of Fig. 1;
Fig. 3 is a plan view partially showing the crawler belt of Fig. 2;
Fig. 4 is a front view showing a first assembly;
Fig. 5 is a plan view showing the first assembly;
Fig. 6 is a front view showing a second assembly;
Fig. 7 is a plan view showing the second assembly;
Fig. 8 is a front view showing a third assembly;
Fig. 9 is a plan view showing the third assembly;
Fig. 10 is a perspective view showing the third assembly;
Fig. 11 is an enlarged cross-sectional view partially showing the crawler belt, taken along line 11-11;
Fig. 12 is a cross-sectional view showing a connected state of the first to third assemblies;
Fig. 13 is an enlarged front view showing a portion of the crawler belt according to a second embodiment;
Fig. 14 is a plan view of the third assembly of Fig. 13;
Fig. 15 is a front view of a third assembly according to a third embodiment;
Fig. 16 is a plan view of the third assembly of Fig. 15; and
Fig. 17 is a cross-sectional view showing a link connecting portion of the third embodiment.

### DISCLOSURE OF THE INVENTION

### PROBLEMS TO BE SOLVED BY THE INVENTION

However, in the crawler belt of the parallel-link type, if the total number of the assemblies of the crawler belt is odd, a crawler belt of a closed loop cannot be formed. In such a case, at least one third assembly of the in-phase link type is required to be arranged between the first assembly and the second assembly. In the third assembly of the in-phase link type having a configuration where the sleeve is rotatable with respect to the links, the third assembly has a rectangular structure having three sides of the two links and one support shaft that is fixed to end portions at one end of the links. In the rectangular structure, one side in which the sleeve is provided is dynamically open. Therefore, in the crawler belt of the parallel-link type, if the third assembly of the in-phase link type is arranged between the first assembly and the second assembly, the rigidity is insufficient at an open end portion of the third link of the third assembly, that is, at an end portion where the sleeve is provided.

The present invention is provided to address the problems in the related art. An objective of the present invention is to provide a crawler belt of a parallel-link type that has a third assembly of an in-phase link type between a first assembly and a second assembly and prevents the rigidity of an open end portion of the third assembly where a sleeve is provided from being insufficient.

To achieve the above objective, the present invention provides a crawler belt for a crawler-type work machine, in which a plurality of first assemblies and second assemblies are connected alternately and a third assembly is provided between at least one pair of the first and second assemblies. The first assembly has a track shoe having a contact surface that contacts a ground, first links of two parallel plates that are fixed to a surface opposite to the contact surface of the track shoe, and a support shaft that is provided between two end portions of the first links. The second assembly has second links of two parallel plates that are fixed to a surface opposite to the contact surface of the track shoe, and a sleeve that is provided between two end portions of the second links. The first assembly and the second assembly are arranged alternately in a state that the sleeve is externally fitted to the support shaft so as to be rotatable. The third assembly has a track shoe having a contact surface that contacts the ground, third links of two plates that are offset and fixed to a surface opposite to the contact surface of the track shoe, a support shaft that is provided between end portions at one end of the third links, and a sleeve that is provided between the other end portions of the third links. The sleeve of the second assembly is externally fitted to the support shaft of the third assembly so as to be rotatable, and the sleeve of the third assembly is externally fitted to the support shaft of the first assembly so as to be rotatable, and the crawler belt is characterized by reinforcing means for reinforcing end portion of the third assembly in which the sleeve is provided.

Therefore, in the crawler belt of a parallel-link type, even if the total number of the assemblies that form the crawler belt is odd, and at least one third assembly of an in-phase link type is arranged between the first assembly and the second assembly, the reinforcing means reinforces the strength of the open end portion of the third assembly in which the sleeve is provided. Therefore, the strength of the crawler belt is prevented from being lowered even if the third assembly is arranged between the first and second assemblies.

The reinforcing means is formed by arranging the grouser of the track shoe so as to correspond to the sleeve of the third assembly. This prevents the strength of the crawler belt from being lowered without increasing the number of parts.

If a reinforcing plate that is fixed to the track shoe is used as the reinforcing means, the third link is reliably reinforced.
If a reinforcing member that is provided between the third links of the third assembly is provided as the reinforcing means, the third link is reliably reinforced.

If the sleeve of the second assembly is movable relative to the second links, and the sleeve of the third assembly is movable relative to the third links, the sleeve of the second assembly can be externally fitted to the support shaft that is at the end portion of the third assembly so as to be rotatable, and the sleeve of the third assembly can be externally fitted to the support shaft of the first assembly so as to be rotatable. This effectively prevents uneven wear of the sleeve.

If the rigidity of the third link of the third assembly reduces gradually toward the sleeve, concentration of stress on a specific portion of the third link is suppressed. This makes the third link sturdy.

If the sleeve of the third assembly is divided into three portions along its axial direction, the outer portions are fixed to a hole of each third link and the middle portion is externally fitted to the support shaft of the first assembly so as to be rotatable, and the thickness of a fixing part of the outer portions of the third links is formed to be greater than the thickness of a support shaft fixing part, connection of the open end portion of the third link and the support shaft is strengthened and a crawler belt of a great strength is obtained.

It is preferable that the inner distance between portions of the third links of the third assembly in which the support shaft is provided be greater than the inner distance between portions of the third links in which the sleeve is provided, that the inner distance between portions of the third links in which the support shaft is provided be equal to the inner distance between the second links, and that the inner distance between portions of the third links in which the sleeve is provided be equal to the inner distance between the first links. In this case, each of the assemblies is connected to each other more surely.

### BEST MODE FOR CARRYING OUT THE INVENTION

One embodiment of the present invention will now be described with reference to drawings.

### (First Embodiment)

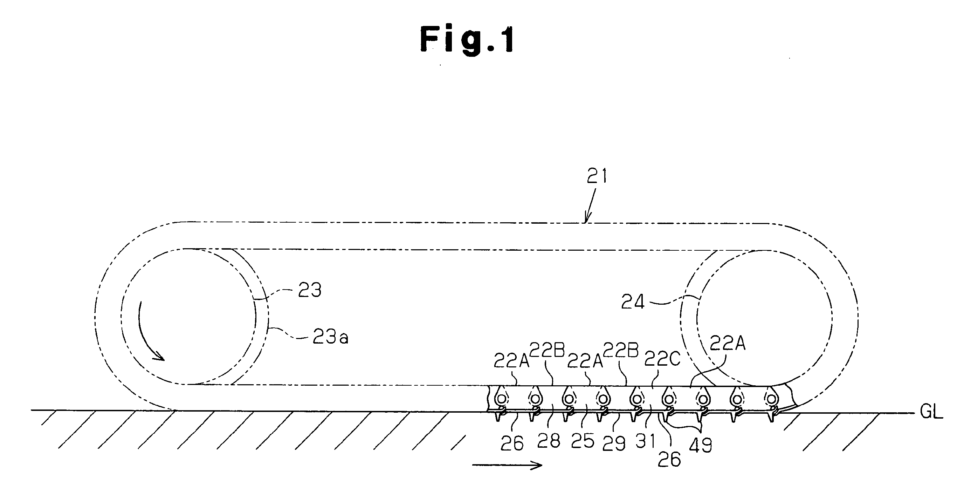

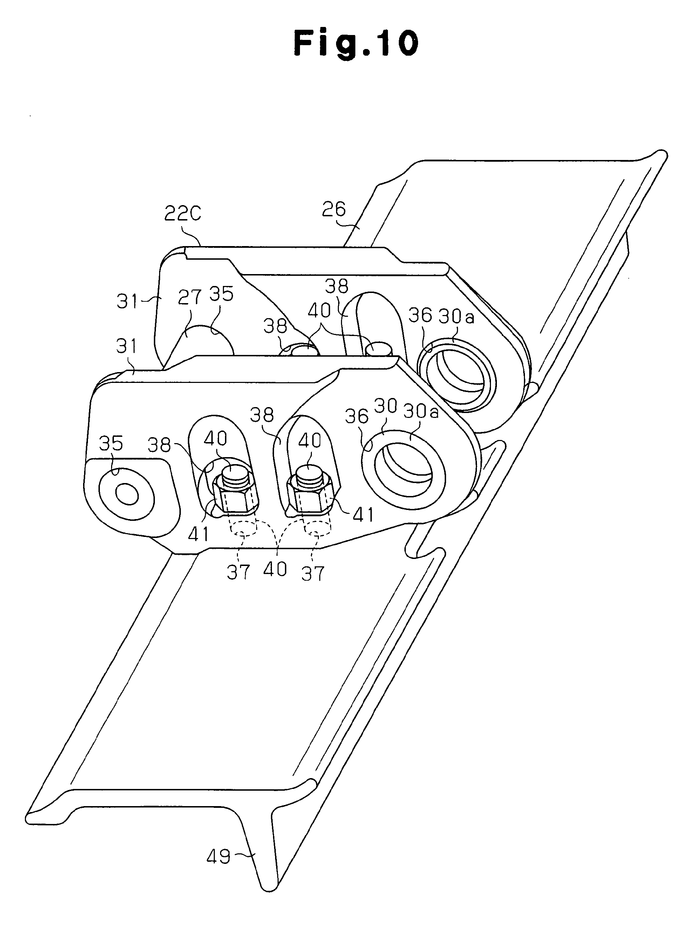

A first embodiment will now be described with reference to Figs. 1 to 12. As shown in Figs. 1, 2, 3 and 12, a crawler belt 21 of the first embodiment is formed in an endless state by arranging a plurality of first assemblies 22A and second assemblies 22B alternately and connecting them. In this case, the first assembly 22A has a support shaft 27 at both end portions, and the second assembly 22B has a sleeve 30 at both end portions. The sleeve 30 is externally fitted to the support shaft 27 to connect the first assembly 22A and the second assembly 22B.

In such a case, if the number of the first assemblies 22A or the number of the second assemblies 22B is odd, the crawler belt 21 of a closed loop cannot be formed. Therefore, if the total number of the first assemblies 22A and the second assemblies 22B is odd, at least one third assembly 22C (one in this embodiment) is arranged and connected between the first assembly 22A and the second assembly 22B. The third assembly 22C has a support shaft 27 at one end portion and a sleeve 30 at the other end portion.

The crawler belt 21 is wound around a drive wheel 24 and an idler wheel 23 that are arranged in a body frame of a running body in a crawler-type work machine such as a bulldozer or a hydraulic excavator (not shown) with a predetermined distance therebetween. In this state, each of the assemblies 22A to 22C is meshed with teeth 24a of a sprocket of the drive wheel 24. Accordingly, the crawler belt 21 is driven. The crawler belt 21 moves around the drive wheel 24 and the idler wheel 23 while being supported by carrier rollers and track rollers (not shown) that are supported by the body frame such that the work machine runs on the ground GL.

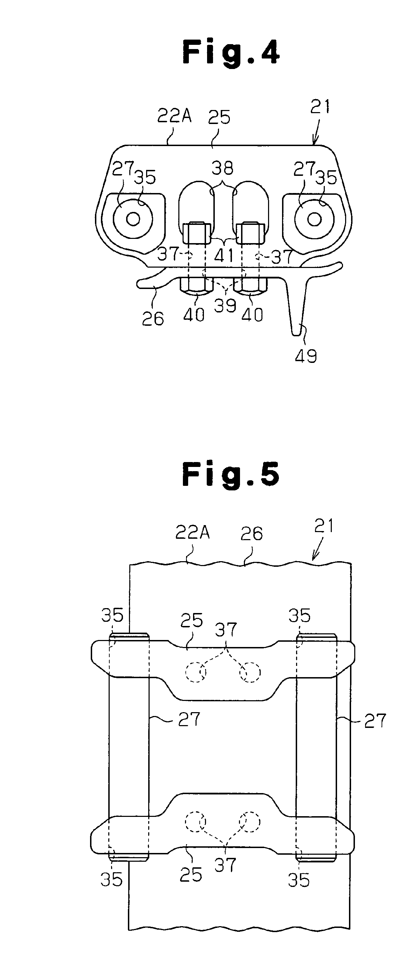

The configuration of the crawler belt 21 will now be described in details.
As shown in Figs. 4 and 5, the first assembly 22A comprises two first links 25 that are arranged parallel to each other, a track shoe 26 that is fixed to outer surfaces of the first links 25, and two support shafts 27 that are provided and fixed between two end portions of the first links 25, respectively. Therefore, the first links 25 are fixed to a surface of the track shoe 26 that is opposite to a contact surface that contacts the ground, or an inner surface of the crawler belt. Portions of the first link 25 where the support shafts are provided and fixed are positioned on a same plane at one end and the other end of the first link 25, and the first link 25 is thus a substantially flat plate.

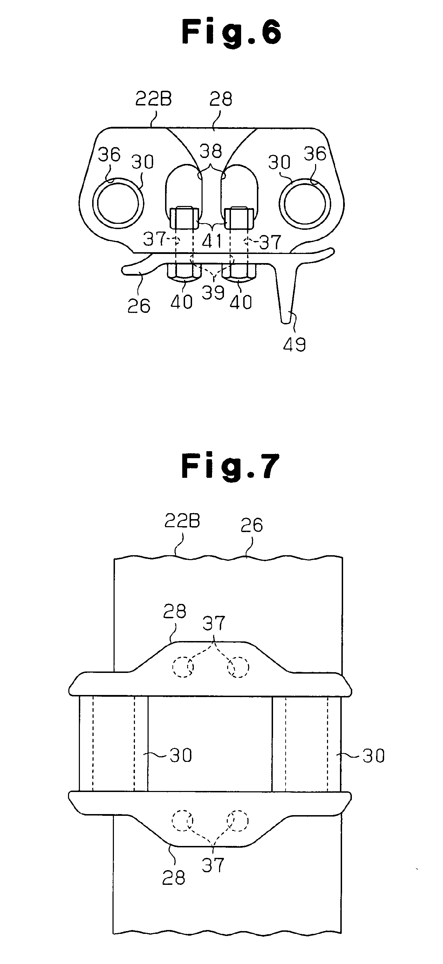

As shown in Figs. 6 and 7, the second assembly 22B has two second links 28 that are arranged parallel to each other, the track shoe 26 that is fixed to outer surfaces of the second links 28, and a pair of sleeves 30 that are provided between two end portions of the second links 28. Therefore, the second links 28 are fixed to a surface that is opposite to a contact surface of the track shoe 26 that contacts the ground, or an inner surface of the crawler belt. The second link 28 is a substantially flat plate, and portions of the second links 28 where the support shafts are provided and fixed are positioned on a same plane at one end and the other end of the second link 28. The inner distance between the first links 25 of the first assembly 22A is greater than the inner distance between the second links 28 of the second assembly 22B.

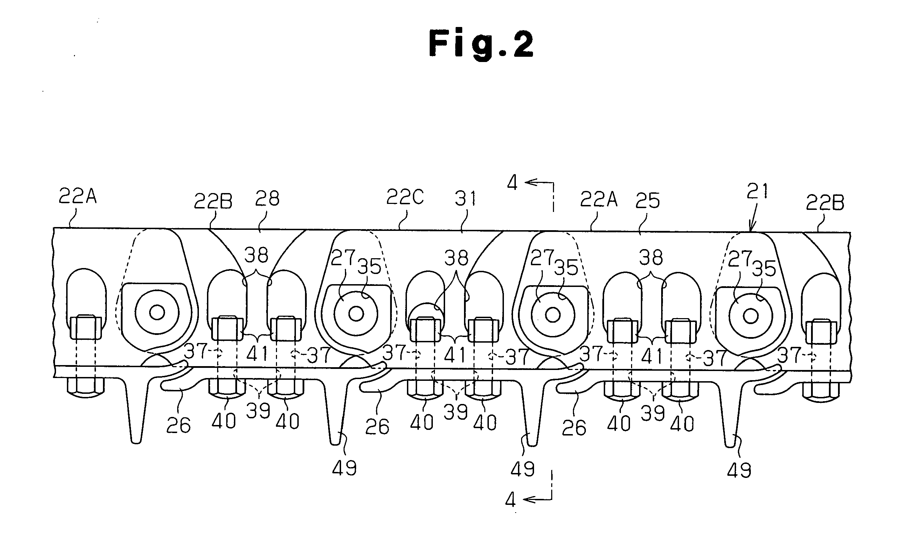

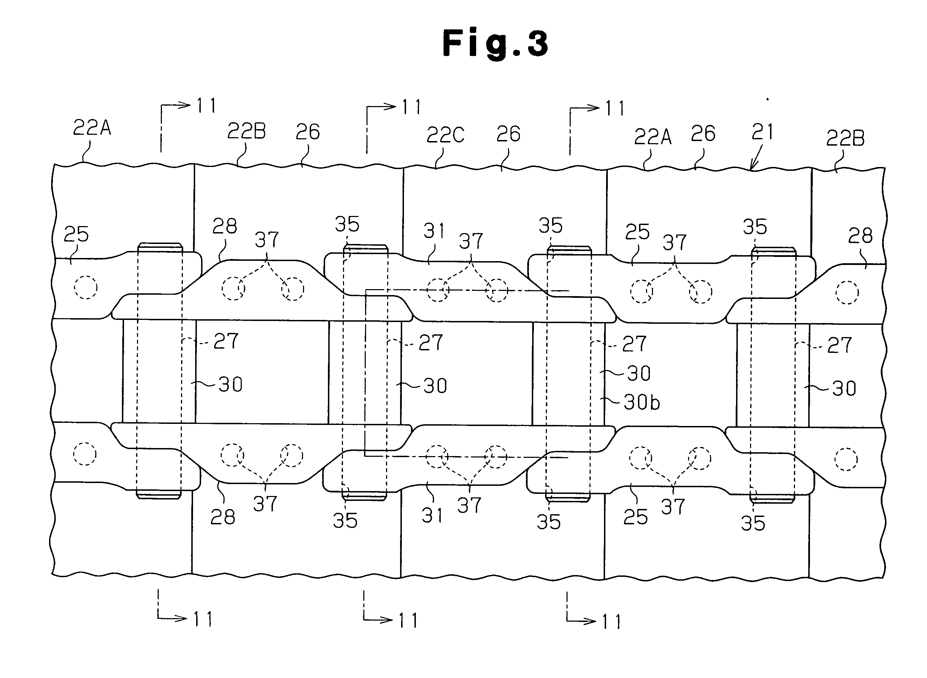

As shown in Figs. 2 and 3, the sleeve 30 of the second assembly 22B is externally fitted to the support shaft 27 of the first assembly 22A so as to be rotatable while the first and second assemblies 22A, 22B are alternately arranged. Accordingly, the first and second assemblies 22A, 22B are alternately connected to each other to form the crawler belt 21.

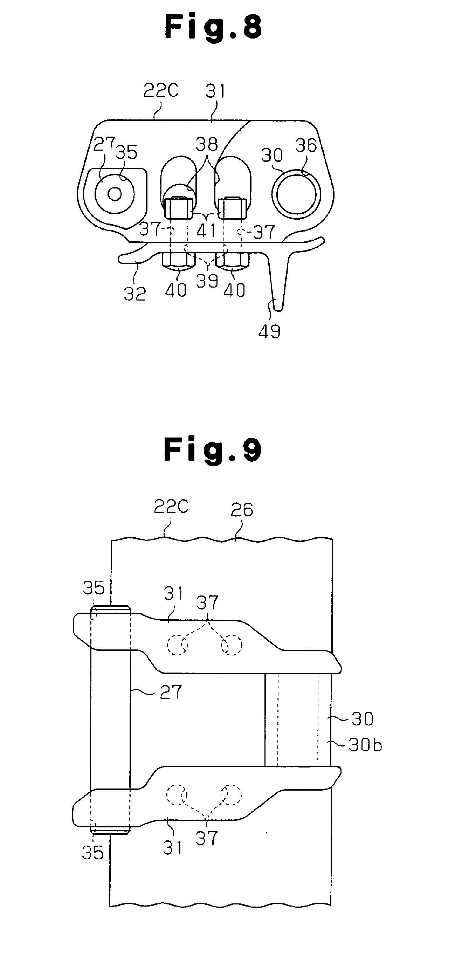

As shown in Figs. 8, 9 and 10, the third assembly 22C has two third links 31 that are arranged parallel to each other, the track shoe 26 that is fixed to outer surfaces of the third links 31, a support shaft 27 that is fixed between end portions at one end of the third links 31, and the sleeve 30 that is provided between the other end portions of the third links 31. Therefore, the third links 31 are fixed to an inner surface of the crawler belt that is opposite to a contact surface of the track shoe 26 that contacts the ground. The inner distance between portions of the third links 31 of the third assembly 22C in which the support shaft 27 is provided is greater than the inner distance between portions of the third links 31 in which the sleeve 30 is provided. The inner distance between portions of the third links 31 in which the support shaft 27 is provided is equal to the inner distance between the second links 28. The inner distance between portions of the third links 31 in which the sleeve 30 is provided is equal to the inner distance between the first links 25. That is, the end portions of the third links 31 in which the support shaft 27 is provided are outwardly offset with respect to the end portions of the third links 31 in which the sleeve 30 is provided.

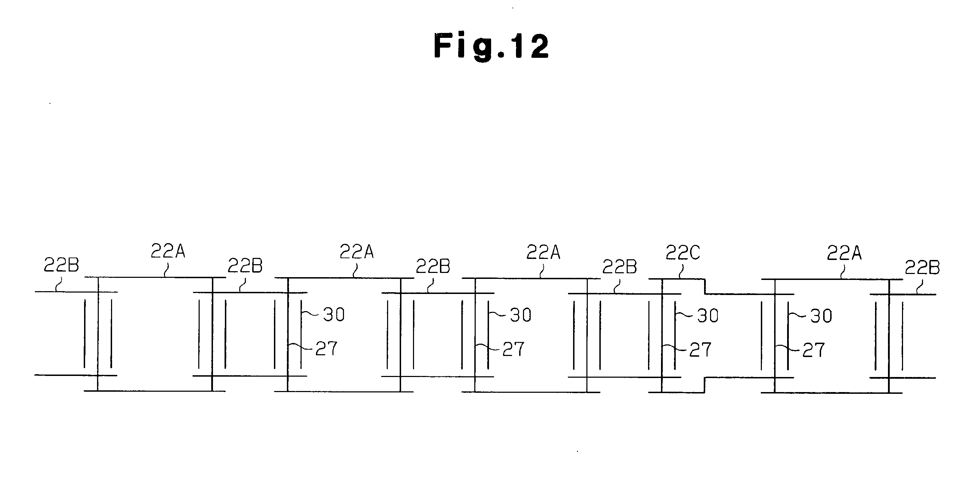

As shown in Figs. 3 and 12, the sleeve 30 of the second assembly 22B is externally fitted to the support shaft 27 of the third assembly 22C so as to be rotatable, and the sleeve 30 of the third assembly 22C is externally fitted to the support shaft 27 of the first assembly 22A, while the third assembly 22C is arranged between the first and second assemblies 22A and 22B. Accordingly, the third assembly 22C is joined to the first and second assemblies 22A and 22B.

As shown in Figs. 4, 8 and 10, shaft holes 35 of a small diameter are formed on the two end portions of the first links 25 of the first assembly 22A and one end portion of each third link 31 of the third assembly 22C. The end portions of the support shaft 27 are pressed into and fixed by the shaft holes 35. As shown in Figs. 6, 8 and 10, shaft holes 36 of a large diameter are formed on the two end portions of the second links 28 of the second assembly 22B and the other end portions of the third links 31 of the third assembly 22C. The divided outer portions 30a of the sleeve 30 are inserted through and fixed and supported by the large-diameter shaft holes 36.

As shown in Figs. 2, 3 and 5, two insertion holes 37 are formed at a middle portion of each link 25, 28, 31 of each assembly 22A, 22B, 22C with respect to its longitudinal direction with a predetermined distance therebetween. Each insertion hole 37 extends in a direction perpendicular to an axial line of each shaft hole 35, 36. Two window holes 38 are formed at the middle portion of each link 25, 28, 31 corresponding to each insertion hole 37 so as to communicate with the insertion hole 37. Two insertion holes 39 are formed in the track shoe 26 of each assembly 22A, 22B, 22C corresponding to the insertion holes 37 of each link 25, 28, 31. Bolts 40 are inserted through the insertion holes 37, 39 of each link 25, 28, 31 and each track shoe 26 from the outer surface of the track shoe 26. Nuts 41 are screwed to distal end portions of the bolts 40 in the window holes 38. The bolts 40 and the nuts 41 fix the track shoe 26 to the outer surface of each link 25, 28, 31.

As shown in Figs. 2 and 8, in the third assembly 22C, the window hole 38 of the third link 31 near the small-diameter shaft hole 35 is formed to have a smaller cross section than the window hole 38 near the large-diameter shaft hole 36. In other words, the window hole 38 near the large-diameter shaft hole 36 has a larger cross section than the other window hole 38. This configuration reduces the rigidity of the third link 31 gradually toward the large-diameter shaft hole 36.

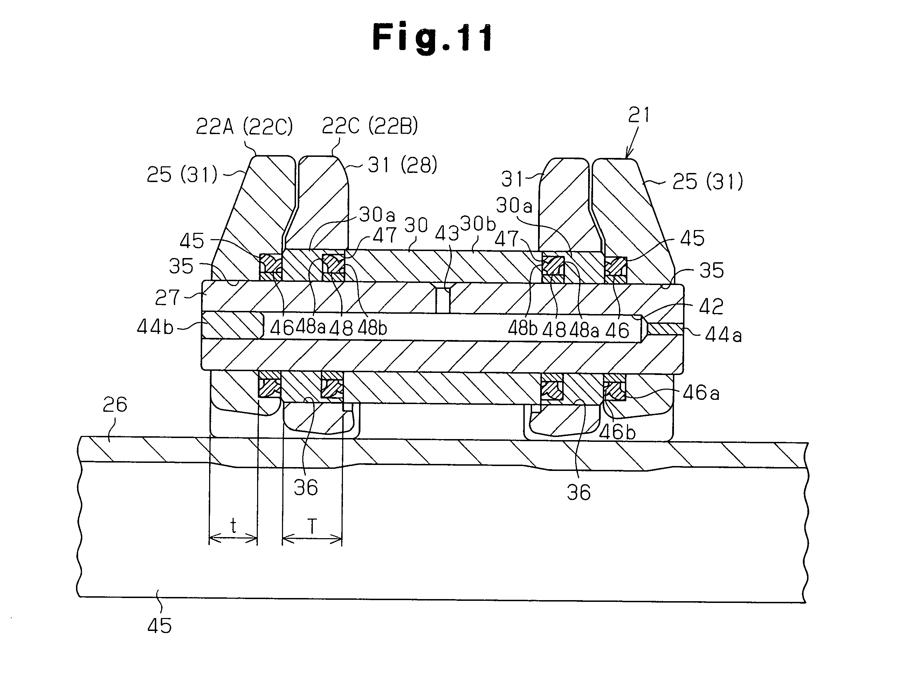

As shown in Fig. 11, the sleeve 30 of the second and third assembly 22B, 22C is divided into three portions 30a, 30b along its axial direction. The outer portions 30a are pressed into and fixed by the shaft holes 36 formed at the end portions of the third links 31. The middle portion 30b is externally fitted to and supported by the support shaft 27 of an adjacent first and third assembly 22A, 22C so as to be movable and rotatable. Accordingly, relative sliding of the teeth 23a of the drive wheel 23 and the sleeve 30 is reduced and uneven wear of the sleeve 30 is prevented.

A lubricant accommodation hole 42 is formed at an axial center of the support shaft 27 of the first and third assembly 22A, 22C. A lubricant supply hole 43 is formed from a middle portion of the lubricant accommodation hole 42 toward an outer periphery of the support shaft 27. Closing plugs 44a, 44b are fitted to the two end portions of the lubricant accommodation hole 42. The lubricant in the accommodation hole 42 is supplied to a portion between the outer peripheral surface of the support shaft 27 and the sleeve 30 of the third or second assembly 22C, 22B via the supply hole 43 to ensure the lubricating property therebetween.

An accommodation recess 45 is formed on the inner peripheral edge of the shaft hole 35 of each of the first and third links 25, 31 of the first and third assemblies 22A, 22C. A first seal ring 46 is provided in the accommodation recess 45. The first seal ring 46 includes a load ring portion 46a and a lip portion 46b. The load ring portion 46a contacts the inner peripheral surface of the accommodation recess 45. The lip portion 46b is joined to the outer surface of the outer portion 30a of the sleeve 30 of the adjacent third or second assembly 22C, 22B.

An accommodation recess 47 is formed at the inner peripheral edge of the outer portion 30a of the sleeve 30 of the second and third assembly 22B, 22C. A second seal ring 48 is provided in the accommodation recess 47. The second seal ring 48 includes a load ring portion 48a and a lip portion 48b. The load ring portion 48a contacts the inner peripheral surface of the accommodation recess 47. The lip portion 48b is joined to the two side surfaces of the middle portion 30b of the adjacent assembly. The cooperation of the second seal ring 48 and the first seal ring 46 suppresses leaking of the lubricant from the two end portions of the support shaft 27 of the first and third assembly 22A, 22C.

Further, as shown in Fig. 11, the thickness T of the end portion of the third link 31 of the third assembly 22C in which the large-diameter shaft hole 36 is provided, and the thickness T of the two end portions (fixed portions of the outer portions) of the second link 28 of the second assembly 22B is set to be greater than the thickness t of the two end portions of the first link 25 of the first assembly 22A and the end portion (support shaft fixing portion) of the third link 31 of the third assembly 22C in which the small-diameter shaft hole 35 is provided.

As shown in Figs. 2, 4, 6, 8 and 10, a grouser 49 projects from an outer surface of the track shoe 26 of each of the assemblies 22A to 22C so as to extend along the width direction of the track shoe 26. The grouser 49 is positioned at the rear side of the vehicle on the ground contacting side. The grouser 49 prevents the vehicle from skidding while the vehicle is running. The track shoe 26 is fixed to the third link 31 by the bolts 40 and the nuts 41 in the third assembly 22C such that the grouser 49 is arranged to correspond to the end portion of the third link 31 in which the sleeve 30 is provided. In other words, the grouser 49 that is positioned at the rear side of the vehicle on the ground contacting side of the crawler belt 21 is positioned to correspond to the open end portion of the third assembly 22C having a three-side structure (see a dashed-dotted line of a U-shape shown in Fig. 3) formed by the two third links 31 and the support shaft 27. In the present embodiment, reinforcing means is formed by the grouser 49 that is provided for the third link 31.

As described above, according to the present embodiment, when the total number of the first and second assemblies 22A, 22B that form the crawler belt 21 of the parallel-link type is odd and the third assembly 22C is provided between the assemblies 22A and 22B, the end portion of the third assembly 22C in which the sleeve 30 is located is positioned to correspond to the grouser 49 of the track shoe 26. Therefore, the open end portion of the third assembly 22C where the sleeve 30 is located can be reinforced by the grouser 49 of the track shoe 26.

The advantages of the present embodiment are described below.
(1) Even if the total number of the assemblies for forming the crawler belt is odd, the crawler belt 21 is manufactured by using at least single third assembly 22C. Further, the open end portion of the third assembly 22C in which the sleeve 30 is located can be reinforced. Therefore, a crawler belt having great strength can be obtained.

(2) The grouser 49 of the track shoe 26 is used for reinforcing the open end portion of the third assembly 22C in which the sleeve 30 is located. This reinforces the open end portion without increasing the number of parts.

(3) The size of a cross section of the two window holes 38 is changed such that the rigidity of the third link 31 of the third assembly 22C reduces gradually toward the sleeve 30, or toward the open portion. Therefore, an external force that acts on the third link 31 can be received by the entire third link 31. This suppresses stress concentrated on a specific portion of the third link 31. Accordingly, the third link 31 can be sturdy against the external force without increasing the thickness of the third link 31.

(4) The thickness T of the end portion of the third link 31 of the third assembly 22C in which the large-diameter shaft hole 36 is provided, or the thickness T of the two end portions of the second links 28 of the second assembly 22B is set to be greater than the thickness t of the two end portions of the first link 25 of the first assembly 22A and the end portion of the third link 31 of the third assembly 22C in which the small-diameter shaft hole 35 is provided. This reinforces the connection of the open end portion of the third link 31 and the support shaft 27. Even if the two end portions of the second links 28 and the end portion of the third links 31 in which the large-diameter shaft hole 36 is provided are dynamically open, the strength of the open portions of the second links 28 and the third link 31 is increased to obtain the crawler belt 21 having a great strength.

### (Second Embodiment)

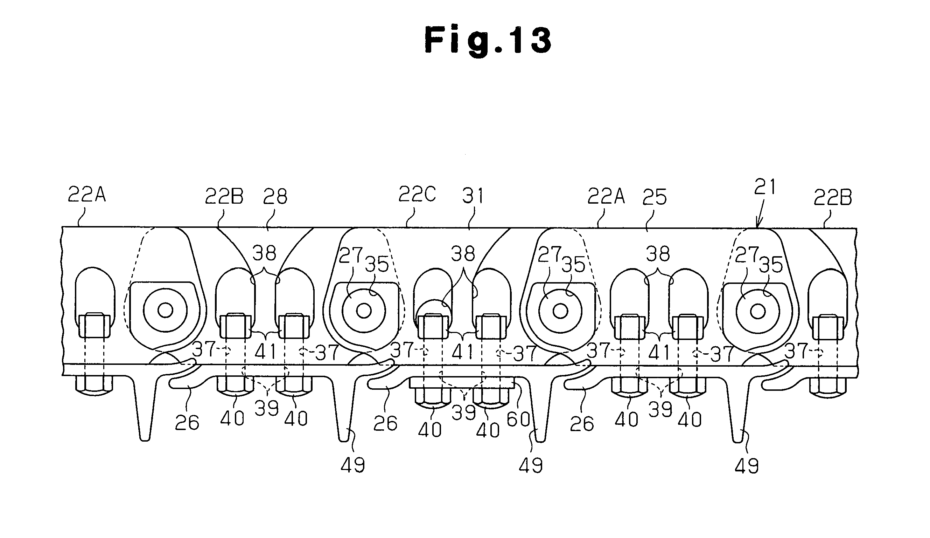

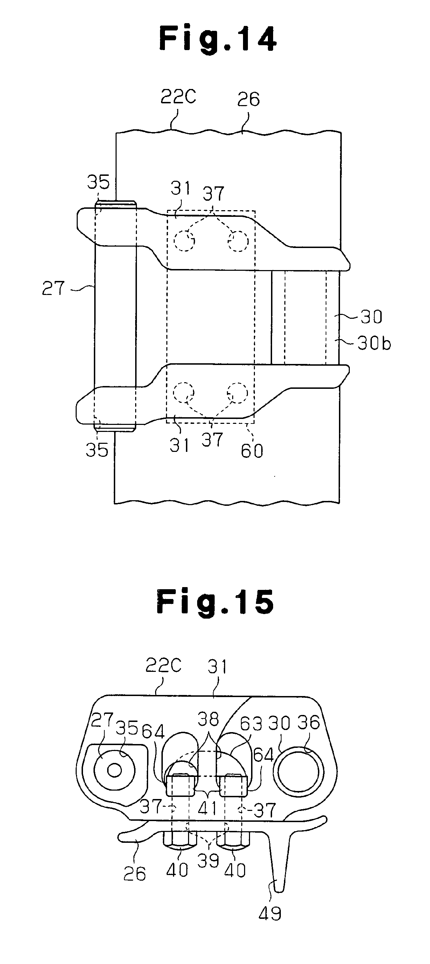

Next, a second embodiment of the present invention will now be described. The differences from the first embodiment will mainly be discussed.
As shown in Figs. 13 and 14, in the second embodiment, a reinforcing plate 60 is provided as the reinforcing means. The reinforcing plate 60 is fixed to the lower surface of the track shoe 26 of the third link 31 by the bolts 40 that fix the third link 31.

Therefore, according to the second embodiment, the reinforcing plate 60 reinforces the open end portion of the third link 31.

### (Third Embodiment)

Next, a third embodiment of the present invention will now be described. The differences from the first embodiment will mainly be discussed.

As shown in Figs. 15 to 17, according to the third embodiment, a reinforcing member 63 is provided as the reinforcing means. The reinforcing member 63 integrally has two nut portions 64 at its two end portions respectively. The nut portions 64 are screwed to the bolts 40 in the window holes 38 such that the reinforcing member 63 is provided and fixed between the links 31.

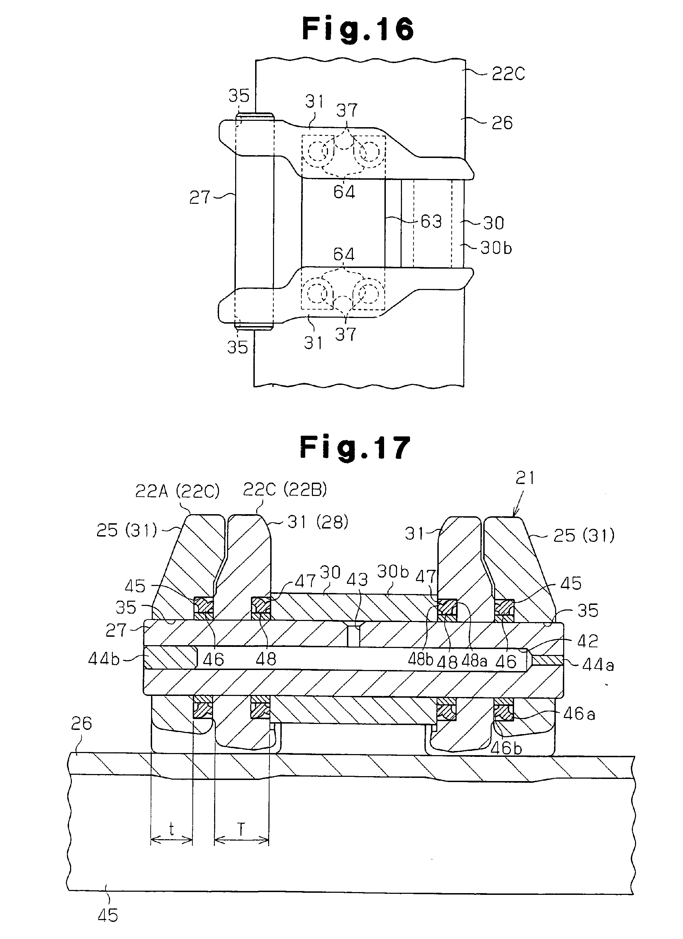

Therefore, according to the third embodiment, the reinforcing member 63 reinforces the open end portion of the third link 31. As shown in Fig. 17, in the third embodiment, the sleeve 30 is not divided into several portions. Therefore, unlike each of the above embodiments, the sleeve 30 does not have the outer portions that are inserted into the third link 31 and is provided between the second links 28 or between the third links 31. Therefore, the sleeve 30 of the second assembly 22B or the third assembly 22C and the link 28, 31 are not connected to each other through the single assembly 22B, 22C.

### (Modifications)

The present invention is not limited to the above embodiments, but may be modified as follows.

In the above embodiments, a plurality of third assemblies 22C may be connected to each other and arranged between the first assembly 22A and the second assembly 22B of the crawler belt 21.
In each of the embodiments, the open portion of the third link 31 in which the large-diameter shaft hole 36 is located corresponds to the grouser 49 of the track shoe 26. The portion of the third link 31 in which the small-diameter shaft hole 35 is located may correspond to the grouser 49 of the track shoe 26. In this case, the open end portion of the third link 31 may be reinforced by providing the reinforcing plate 60 or the reinforcing member 63.

## Claims

1. A crawler belt for a crawler-type work machine, being **characterized in that** a plurality of first assemblies and second assemblies are connected alternately and a third assembly is provided between at least one pair of the first and second assemblies,
wherein the first assembly has a track shoe having a contact surface that contacts the ground, first links formed of two plates that are fixed to a surface opposite to the contact surface of the track shoe so as to be parallel to each other, and a support shaft that is provided between end portions of the first links,
wherein the second assembly has a track shoe having a contact surface that contacts the ground, second links formed of two plates that are fixed to a surface opposite to the contact surface of the track shoe so as to be parallel to each other, and a sleeve that is provided between end portions of the second links, wherein the first assembly and the second assembly are arranged alternately in a state that the sleeve is externally fitted to the support shaft so as to be rotatable,
wherein the third assembly has a track shoe having a contact surface that contacts the ground, third links formed of two plates that are offset and fixed to a surface opposite to the contact surface of the track shoe, a support shaft that is provided between end portions at one end of the third links, and a sleeve that is provided between the other end portions of the third links, and
wherein the sleeve of the second assembly is externally fitted to the support shaft of the third assembly so as to be rotatable, and the sleeve of the third assembly is externally fitted to the support shaft of the first assembly so as to be rotatable, and wherein reinforcing means reinforces an end portion of the third assembly in which the sleeve is located.

2. The crawler belt according to claim 1, being **characterized in that** each track shoe has a grouser on its contact surface, and the reinforcing means is formed by arranging the grouser so as to correspond to the sleeve of the third assembly.

3. The crawler belt according to claim 1, being **characterized in that** the reinforcing means is a reinforcing plate that is fixed to the track shoe.

4. The crawler belt according to claim 1, being **characterized in that** the reinforcing means is a reinforcing member that is provided between the third links of the third assembly.

5. The crawler belt according to any one of claims 1 to 4, being **characterized in that** the rigidity of the third link of the third assembly reduces gradually toward the sleeve.

6. The crawler belt according to any one of claims 1 to 4, being **characterized in that** the sleeve of the second assembly is provided movably between the second links, and the sleeve of the third assembly is movably provided between the third links.

7. The crawler belt according to any one of claims 1 to 4, being **characterized in that** the sleeve of the third assembly is divided into three portions along its axial direction, and outer portions are each fixed to a hole formed in one the third links and a middle portion is externally fitted to the support shaft of the first assembly so as to be rotatable,
wherein the thickness of a fixing part of the outer portion of each third link is formed to be greater than the thickness of the support shaft fixing part.

8. The crawler belt according to any one of claims 1 to 4,
wherein an inner distance between portions of the third links of the third assembly in which the support shaft is located is set greater than an inner distance between portions of the third links in which the sleeve is located, wherein an inner distance between portions of the third links in which the support shaft is located is set to be equal to an inner distance between the second links, and wherein an inner distance between portions of the third links in which the sleeve is located is set to be equal to an inner distance between the first links.
